# EUROPÄISCHE PATENTANMELDUNG

(11) **EP 0 542 320 A1**
(43) Veröffentlichungstag der Anmeldung: **19.05.1993**
(21) Anmeldenummer: 92121709.7
(22) Anmeldetag: 21.10.1987
(51) Int. Cl.: C08G 63/79, C08G 63/193

(54) **Verfahren zur Herstellung eines aromatischen Polyesters**

(30) Priorität: 21.10.1986 AT 2796/86
(62) Teilanmeldung aus: 87906638.9
(71) Anmelder: MINNESOTA MINING AND MANUFACTURING COMPANY, Saint Paul Minnesota 55144-1000 (US)
(72) Erfinder: Fialla, Peter, A-2344 Maria Enzersdorf (AT); Hampl, Edward F., Jr., Ramsey, Minnesota 55106 (US); Iqbal, Mohammed M., Williamson, Texas (US)
(74) Vertreter: Baillie, Iain Cameron

(57) **Zusammenfassung**

Bei einem kontinuierlichen Verfahren zur Herstellung aromatischer Polyester durch Polykondensation von 9,9-Bis (4-hydroxyphenyl)fluoren mit iso-Phthalsäurechlorid und/oder tere-Phthalsäuechlorid als Dicarbon-Säurehalogenid nach dem Zweiphasengrenzflächen-Polykondensationsverfahren, wird zunächst aus der wässerigen Phase, bestehend aus einer Lösung aus den Diphenolen, Alkalihydroxyd zur Bildung der Diphenolate und gegebenenfalls einem Phasentransferkatalysator in Wasser oder in einem Gemisch aus Wasser und einem organischen Lösungsvermittler mit einem organischen Lösungsmittel; kontinuierlich eine feine Voremulsion hergestellt, welche gemeinsam mit der die Säurechloridlösung bildenden organisch-flüssigen Phase eine Dispergiereinrichtung in Mengen zugeführt werden, daß die an der Polykondensationsreaktion teilnehmenden Verbindungen in der Dispergiereinrichtung im konstanten Verhältnis zueinander zur Bildung einer Reaktionsemulsion gemischt werden, welche danach nacheinander eine oder mehrere Dispergiereinrichtungen und/oder statische Mixer durchläuft, währenddessen die Polykondensation abläuft und beendet wird. Danach werden die Phasen getrennt und der gebildete Polyester durch Einleiten von Aceton aus der organischen Phase gefällt.

## Beschreibung

Die Erfindung betrifft ein Verfahren zur Herstellung eines aromatischen Polyesters durch Polykondensation von 9,9-Bis (4-hydroxyphenyl)fluoren mit iso-Phthalsäurechlorid und/oder tere-Phthalsäuechlorid als Dicarbon-Säurehalogenid nach dem Zweiphasengrenzflächen-Polykondensationsverfahren, indem aus der wässerigen Phase, bestehend aus einer Lösung aus den Diphenolen, Alkalihydroxyd zur Bildung der Diphenolate und gegebenenfalls einem Phasentransferkatalysator in Wasser oder in einem Gemisch aus Wasser und einem organischen Lösungsvermittler, und der organisch-flüssigen Phase, bestehend aus einer Lösung der Säurehalogenide in einem organischen Lösungsmittel, eine feine Reaktionsemulsion hergestellt wird, wobei die in die organisch-flüssige Phase übergeführten Diphenolate mit den Säurechloriden die Polykondensationsreaktion eingehen.

Ein Verfahren der obengenannten Art ist bekannt, z.B. auch aus der europäischen Patentanmeldung 64972. Das Polykondensationsverfahren wird hier als Chargen-Verfahren durchgeführt, wobei in einem Reaktionsgefäß die wäßrige und die oragnisch-flüssige Phase unter kräftigem Rühren gemischt werden und der bei der Polykondensation sich bildende Polyester nach Trennung der Phasen schließlich aus der organisch-flüssigen Phase gefällt wird.

Die nach einem solchen Chargen-Verfahren hergetellten Polyester weisen aber oft eine Molekulargewichtsverteilung mit einem relativ hohen Oligomeranteil auf, der sich z.B. auf die Materialeigenschaften der aus einem solchen Polyester hergestellten Filme in vielen Fällen negativ auswirkt. Außerdem ergeben sich bei diesem Verfahren bei größeren Chargen die Schwierigkeiten, die Emulsion, deren Viskosität mit fortschreitender Polymerbildung stark zunimmt, in ausreichendem Maße zu rühren sowie - wegen der Exothermie des Prozesses - durch einen hohen Kühlaufwand auf den gewünschten niedrigen Reaktionstemperaturen zu halten. Außerdem sind solche Chargen-Verfahren in ihren Ergebnissen nicht sehr gut reproduzierbar.

Der Erfindung liegt nun die Aufgabe zugrunde, ein Verfahren der eingangs genannten Art anzugeben, das in gut reproduzierbarer Weise die Herstellung von aromatischen Polyester in großen Mengen erlaubt, welche Polyester nur einen geringen Anteil an Oligomeren aufweisen.

Die der Erfindung zugrundliegende Aufgabe wird in dem erfindungsgemäßen Verfahren gelöst, das dadurch gekennzeichnet ist; daß für ein kontinuierliches Verfahren aus der wäßrigen Phase und einem organischen Lösungsmittel eine feine Voremulsion hergestellt wird, daß die Voremulsion und die organisch-flüssige Phase dem Eingang einer Dispergiereinrichtung kontinuierlich in Mengen zugeführt werden, daß die an der Polykondensationsreaktion teilnehmenden Verbindungen im konstanten Verhältnis zueinander in der Dispergiereinrichtung zur Bildung der Reaktionsemulsion gemischt werden und daß die Reaktionsemulsion danach, während die Reaktion stattfindet, nacheinander kontinuierlich eine oder mehrere Dispergiereinrichtungen und/oder statische Mixer durchläuft, wonach die Reaktionsemulsion kontinuierlich abgeführt wird, die beiden Phasen getrennt werden und nach Waschen der organisch-flüssigen Phase aus dieser der Polyester durch Einleiten von Aceton gefällt wird.

Dabei nimmt voteilhaft im Volumen der Reaktionsemulsion und gegebenenfalls auch der Voremulsion die wäßrige Phase den kleineren Volumsanteil ein, so daß die organisch-flüssige Phase bzw. das organische Lösungsmittel die kontinuierliche Phase der betreffenden Emulsion bildet.

Gemäß einer vorteilahften Ausgestaltung der Erfindung durchläuft die Reaktionsemulsion zunächst einen oder mehrere statische Mixer, danach eine Dispergiereinrichtung und anschließend wieder einen oder mehrere statische Mixer.

Nach einer weiteren vorteilhaften Ausgestaltung der Erfindung ist das erfindungsgemäße Verfahren dadurch gekennzeichnet, daß Dispergiereinrichtungen eingesetzt werden, die jeweils zumindest einen sich mit Umfangsgeschwindigkeiten von mindestens 5 m/s, vorzugsweise jedoch von mindestens 10 m/s drehenden Rotor aufweisen, der mit mehreren Ausnehmungen oder Durchbrüchen versehen ist und der jeweils durch eine schmale Mischkammer von einem zugehörigen, gegebneenfalls ebenfalls mit Ausnehmungen oder Durchbrüchen versehenen Stator getrennt ist.

Nachstehend wird das erfindungsgemäße Verfahren anhand eines Beispiels näher erläutert.

Zur Herstellung der wäßrigen Phase werden in 3 l demineralisiertem Wasser und 1,5 l Dioxan zunächst 92 g (2,3 Mol) NaOH und danach 350 g (1 Mol) 9,9-Bis(4-hydroxyphenyl)fluoren unter Erwärmen gelöst. Dieser Lösung werden dann 23 g (0,1 Mol) Benzyltriäthylammoniumchlorid, in 100 ml demineralisiertem Wasser gelöst, als Phasentransferkatalysator zugegeben.

Die organisch-flüssige Phase besteht aus einer Lösung von 101,6 g (0,5005 Mol) iso-Phthaloylchlorid und 101,6 g (0,5005 Mol) tere-Phthaloylchlorid in 1 l wasserfreiem (absolutiertem) 1,2-Dichlorethan.

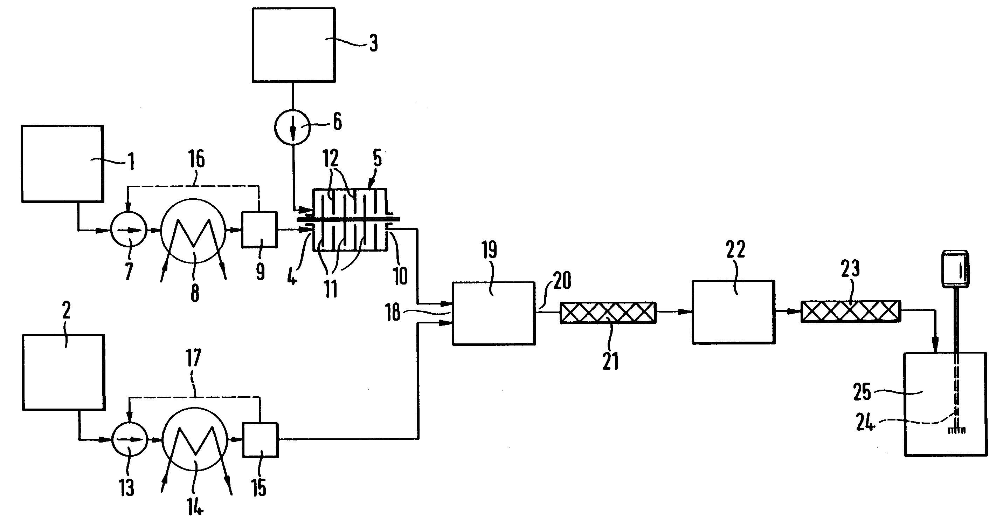

Die Zeichnung stellt ein Schema der bei dem vorliegenden Verfahrensbeispiel zur Verwendung gelangenden Vorrichtung dar.

Die wäßrige Phase und organisch-flüssige Phase werden jweils auf etwa 17°C gekühlt und in die Behälter 1 bzw. 2 eingebracht. In den Behälter 3 wird 1,2-Dichlorethan (DCE) in einer Menge von 6 l eingefüllt. Während des Ablaufes des Verfahrens werden zur Herstellung einer Voremulsion dem Eingang 4 einer ersten Dispergiereinrichtung 5 zugeführt: aus dem Behälter 3 über eine Pumpe 6 das DCE mit einer Flußmenge von 0,2 l/min und aus dem Behälter 1 über eine Pumpe 7, einen Wärmetauscher 8 und ein Durchflußmeßgerät 9 die wäßrige Phase in einer Flußmenge von 0,16 l/min. Aus dem DCE und der wäßrigen Phase wird beim Durchgang durch die Dispergiereinrichtung 5 kontinuierlich eine feine Voremulsion mit dem DCE als kontinuierliche Phase hergestellt, die am Ausgang 10 der Dispergiereinrichtung 5 abgeführt wird.

Die Dispergiereinrichtung 5 ist vom Rotor-Stator-Typ, welche z.B. drei hintereinandergeschaltete Mischstufen enthält, wobei jede Mischstufe einen mit z.B. spaltförmigen Durchbrüchen versehenen Rotor 11 aufweist, der - in Durchflußrichtung - über eine schmale Mischkammer von einem ebenfalls mit Durchbrüchen versehenen Stator 12 versehen ist. Die Umfangsgeschwindigkeit der auf einer gemeinsamen Antriebswelle sitzenden Rotoren 11 beträgt dabei etwa 17 m/s.

Gleichzeitig mit der kontinuierlichen Herstellung der Voremulsion wird aus dem Behälter 2 über eine Pumpe 13, einen Wärmetauscher 14 und ein Durchflußmeßgerät 15 die aus der Säurechloridlösung bestehende organisch-flüssige Phase mit einer Flußmenge von 0,04 l/min kontinuierlich und gemeinsam mit der Voremulsion dem Eingang 18 einer zweiten Dispergiereinrichtung 19, die ähnlich wie die erste Dispergiereinrichtung 5 aufgebaut ist, zugeführt, in welche die Säurechloridlösung mit dem DCE der Voremulsion gemischt und die Feinheit der Emulsion aufrechterhalten bzw. noch weiter gesteigert wird. In der Dispergiereinrichtung 19 setzt dann die Polykondensation schlagartig ein, wobei das sich bildende Polymere in der organisch-flüssigen Phase gelöst bleibt.

Für das einwandfreie Funktionieren des Verfahrens ist es wichtig, daß das in der wäßrigen Phase gelöste Diphenolat und das in der organisch-flüssigen Phase zugeführte Säurechlorid immer in einem genau definierten konstanten Verhältnis zueinander zur Reaktion gebracht werden. Dazu werden die beiden Phasen mit Hilfe der beiden Wärmetauscher 8 bzw. 14 auf einer Temperatur von z.B. 17°C gehalten und mit dieser Temperatur den Durchflußmeßgeräten 9 und 15 zugeführt, welche über die mit 16 und 17 angedeuteten Regelkreise die Förderleistung der Pumpen 7 bzw. 13 im Hinblick auf die konstanten Durchflußmengen steuern.

Die vom Ausgang 20 der Dispergiereinrichtung 19 abgeführte in Form einer feinen Emulsion mit homogener organisch-flüssiger Phase vorliegende Reaktionsemulsion wird durch einen ersten statischen Mixer 21, anschließend durch eine weitere Dispergiereinrichtung 22 von derselben Art wie die beiden ersten Dispergiereinrichtungen 5 bzw.19 und schließlich durch einen zweiten statischen Mixer 23 geleitet, wonach die Polykondensationsreaktion abgeschlossen ist. Die Verweilzeit der Reaktionsemulsion in der Reaktionszone, d.h. vom Eingang 18 der Dispergiereinrichtung 19 bis zum Ausgang des zweiten statischen Mixers 23 beträgt bei dem vorliegenden Beispiel etwa 4 min.

Die Emulsion, in welcher der gebildete Polyester in der organisch-flüssigen Phase gelöst ist, wird dann in ein mit einem Rührwerk 24 versehenen Gefäß 25, in welchem etwa 10 l demineralisiertes Wasser vorgelegt ist, eingeleitet. Nach Verbrauch der in den Behältern 1 und 2 vorbereiteten Lösungen und nach Auslaufen des Polykondensationsvorganges werden die beiden Phasen durch Absitzen getrennt und die alkalische wäßrige Phase verworfen. Die verbleibende Lösung des Polyesters in DCE wird dann chloridfrei gewaschen und der Polyester durch Einleiten von Aceton gefällt, zentrifugiert und bei 130°C getrocknet. Die bei 30°C an einer Lösung von 0,5 g Polyester in 100 ml Lösungsmittel, bestehend zu 60 Gew.% aus Phenol und zu 40 Gew.% aus 1,1,2,2-Tetrachlorethan, gemessene Inhärente Viskosität betrug 1,62 dl/g.

Mit Hilfe des erfindungsgemäßen Verfahrens können Polyester hergestellt werden, welche überwiegend Säureendgruppen oder phenolische Endgruppen aufweisen, je nachdem das Säurechlorid bzw. das Diphenolat in geringem Überschuß eingesetzt wird. Wegen der zur Polykondensation in Konkurrenz stehenden Hydrolyse des Säurechlorids, welche die für die Polykondensationsreaktion zur Verfügung stehende Säurechloridmenge reduziert, wird zur Erreichung eines für die Polykondensation maßgeblichen stöchiometrischen Verhältnisses der eingesetzten Reaktanden, bei welchen erfahrungsgemäß ein Maximum der Inhärenten Viskosität erreicht wird, vorzugsweise mit geringem Säurechloridüberschuß gearbeitet (1,001 Mol Säurechlorid gegenüber 1 Mol Diphenolat bei dem vorliegenden Beispiel).

## Patentansprüche

1. Verfahren zur Herstellung eines aromatischen Polyesters durch Polykondensation von 9,9-Bis (4-hydroxyphenyl)fluoren mit iso-Phthalsäurechlorid und/ oder tere-Phthal-säuechlorid als Dicarbon-Säurehalogenid nach dem Zweiphasengrenzflächen-Polykondensationsverfahren, indem aus der wässerigen Phase, bestehend aus einer Lösung aus den Diphenolen, Alkalihydroxyd zur Bildung der Diphenolate und gegebenenfalls einem Phasentransferkatalysator in Wasser oder in einem Gemisch aus Wasser und einem organischen Lösungsvermittler, und der organisch-flüssigen Phase, bestehend aus einer Lösung der Säurehalogenide in einem organischen Lösungsmittel, eine feine Reaktionsemulsion hergestellt wird, wobei die in die organisch-flüssige Phase übergeführten Diphenolate mit den Säurechloriden die Polykondensationsreaktion eingehen, dadurch gekennzeichnet, daß für ein kontinuierliches Verfahren aus der wäßrigen Phase und einem organischen Lösungsmittel eine feine Voremulsion hergestellt wird, daß die Voremulsion und die organisch-flüssige Phase dem Eingang einer Dispergiereinrichtung kontinuierlich in Mengen zugeführt werden, daß die an der Polykondensationsreaktion teilnehmenden Verbindungen im konstanten Verhältnis zueinander in der Dispergiereinrichtung zur Bildung der Reaktionsemulsion gemischt werden und daß die Reaktionsemulsion danach, während die Reaktion stattfindet, nacheinander kontinuierlich eine oder mehrere Dispergiereinrichtungen und/oder statische Mixer durchläuft, wonach die Reaktionsemulsion kontinuierlich abgeführt wird, die beiden Phasen getrennt werden und nach Waschen der organischflüssigen Phase aus dieser der Polyester durch Einleiten von Aceton gefällt wird.

2. Verfahren nach Anspruch 1, dadurch gekennzeichnet, daß im Volumen der Reaktionsemulsion und gegebenenfalls auch der Voremulsion die wäßrige Phase den kleineren Volumsanteil einnimmt, so daß die organisch-flüssige Phase bzw. das organische Lösungsmittel die kontinuierliche Phase der betreffenden Emulsion bildet.

3. Verfahren nach Anspruch 1 oder 2, dadurch gekennzeichnet, daß die Reaktionsemulsion zunächst einen oder mehrere statische Mixer (21), danach eine Dispergiereinrichtung (22) und anschließend wieder einen oder mehrere statische Mixer (23) durchläuft.

4. Verfahren nach einem der Ansprüche 1 bis 3, dadurch gekennzeichnet, daß Dispergiereinrichtungen (5, 19, 22) eingesetzt werden, die jeweils zumindest einen sich mit Umfangsgeschwindigkeiten von mindestens 5 m/s, vorzugsweise jedoch von mindestens 10 m/s drehenden Rotor (11) aufweisen, der mit mehreren Ausnehmungen oder Durchbrüchen versehen ist und der jeweils durch eine schmale Mischkammer von einem zugehörigen, gegebenenfalls ebenfalls mit Ausnehmungen oder Durchbrüchen versehen Stator (12) getrennt ist.
